# FASCICULE DE BREVET EUROPEEN

(11) **EP 1 910 249 B1**
(45) Date de publication et mention de la délivrance du brevet: **08.04.2009**
(21) Numéro de dépôt: 06794485.0
(22) Date de dépôt: 19.07.2006
(51) Int. Cl.: C04B 38/08, C04B 35/565, B01D 53/94, F01N 3/022

(54) **PROCEDE DE PREPARATION D'UNE STRUCTURE POREUSE UTILISANT DES AGENTS POROGENES A BASE DE SILICE**
VERFAHREN ZUR HERSTELLUNG EINER PORÖSEN STRUKTUR UNTER VERWENDUNG VON PORENBILDENDEN MITTELN AUF SILIZIUMBASIS
METHOD FOR PREPARING A POROUS STRUCTURE USING SILICA-BASED PORE-FORMING AGENTS

(30) Priorité: 29.07.2005 FR 0552393
(43) Date de publication de la demande: 16.04.2008
(73) Titulaire: Saint-Gobain Centre de Recherches et d'Etudes Européen, 92400 Courbevoie (FR)
(72) Inventeur: URFFER, Daniel, F-84450 Saint-saturnin (FR); BARATAUD-DIEN, Carine, F-13410 Lambesc (FR)
(74) Mandataire: Jamet, Vincent
(86) Numéro de dépôt international: PCT/FR2006/050731
(87) Numéro de publication internationale: WO 2007/012777

(56) Documents cités:
- EP-A- 1 403 231
- EP-A- 1 493 724
- FR-A1- 2 671 072
- JP-A- 2001 206 785
- US-A- 6 017 473
- CHEMICAL ABSTRACTS, vol. 117, no. 12, 21 septembre 1992 (1992-09-21), Columbus, Ohio, US; abstract no.: 117120q, XP000373839 & JP 04 114975 A (TOUKAI KOUGIYOU KK) 15 avril 1992 (1992-04-15)
- PATENT ABSTRACTS OF JAPAN vol. 2003, no. 04, 2 avril 2003 (2003-04-02) & JP 2002 356384 A (ASAHI GLASS CO LTD), 13 décembre 2002 (2002-12-13)
- DATABASE WPI Section Ch, Week 200304 Derwent Publications Ltd., London, GB; Class H06, AN 2003-044962 XP002382487 & JP 2002 326881 A (HITACHI METALS LTD) 12 novembre 2002 (2002-11-12)
- E-SPHERES PRODUCT SHEET, [Online] 23 juin 2005 (2005-06-23), XP002441640 Extrait de l'Internet: URL:http://web.archive.org/web/*/http://ww w.envirospheres.com/products.htm> [extrait le 2007-07-06]

## Description

L'invention se rapporte au domaine des structures filtrantes, notamment utilisées dans une ligne d'échappement d'un moteur à combustion interne du type diesel ou essence.

Les filtres permettant l'élimination des suies issues d'un moteur diesel sont bien connus de l'art antérieur. Ces structures présentent le plus souvent une structure en nid d'abeille, une des faces de la structure permettant l'admission des gaz d'échappement à traiter et l'autre face l'évacuation des gaz d'échappement traités. La structure comporte, entre les faces d'admission et d'évacuation, un ensemble de conduits ou canaux adjacents d'axes parallèles entre eux séparés par des parois poreuses. Les conduits sont obturés à l'une ou l'autre de leurs extrémités pour délimiter des chambres d'entrée s'ouvrant suivant la face d'admission et des chambres de sortie s'ouvrant suivant la face d'évacuation. Les canaux sont alternativement obturés dans un ordre tel que les gaz d'échappement, au cours de la traversée du corps en nid d'abeille, sont contraints de traverser les parois latérales des canaux d'entrée pour rejoindre les canaux de sortie. De cette manière, les particules ou suies se déposent et s'accumulent sur les parois poreuses du corps filtrant.

De façon connue, durant son utilisation, le filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration.

Les matériaux employés dans de telles structures doivent donc se caractériser à la fois par une porométrie adaptée (porosité, taille médian des pores) pour permettre la traversée des gaz à travers les parois mais également présenter une résistance thermo-mécanique élevée. Il est connu que les filtres à base de carbure de silicium permettent d'obtenir de telles propriétés.

Des exemples de tels filtres sont par exemple décrits dans les demandes de brevets EP 816 065, EP 1 142 619, EP 1 455 923 ou encore WO 2004/090294 et WO 2004/065088.

La production des structures poreuses à base de carbure de silicium comprend le plus souvent dans une première étape la formation d'une pâte meuble puis, à partir de celle-ci, la mise en forme par extrusion d'un monolithe plastique en forme de nid d'abeille. Le monolithe brut obtenu est ensuite placé dans un four où il est cuit à haute température, par exemple à une température supérieure à 2100°C.

Il est connu qu'il est indispensable qu'un liant temporaire soit incorporé dans la pâte initiale. Présent en début de cuisson, ce liant permet notamment la connexion des grains de carbure de silicium entre eux et favorise la formation des pores lors de la solidification de la structure.

De façon connue, afin d'obtenir des niveaux de porosité des parois de la structure compatibles avec une utilisation comme filtre à particules, c'est-à-dire compris entre typiquement 20 et 65%, il est en général indispensable d'introduire en plus dans le mélange des agents porogènes organiques. Ces agents porogènes organiques sont vaporisés à plus ou moins haute température lors de la cuisson. Des agents porogènes tels que le polyéthylène, le polystyrène, l'amidon ou le graphite sont décrits dans les demandes JP 08-281036 ou EP 1 541 538.

On connaît, par exemple de part la demande EP 1 541 538, les difficultés occasionnées par l'étape d'élimination des composés organiques dans les premiers stades de la cuisson. Cette première phase de la cuisson, couramment appelée déliantage dans le métier, concerne en général principalement l'élimination du liant et de l'agent porogène de la structure à une température comprise entre 100 et 750°C. Lors du déliantage, une combustion conjointe et non contrôlée des liants et des agents porogènes organiques présents dans la structure peut entraîner de forts gradients thermiques au sein de la structure. Le déliantage est de ce fait une étape critique dans le procédé de cuisson des structures filtrantes, pouvant être à l'origine d'importants défauts dans la structure finale. Pour empêcher l'apparition de fissures lors de l'étape de déliantage d'un matériau céramique poreux, la demande de brevet EP 1 541 538 propose d'imposer un palier de température, sous air, compris entre -50°C à +10°C par rapport à la température de début de combustion du liant temporaire. Selon les auteurs, un tel procédé permet de réduire efficacement le gradient thermique au sein du filtre né de la combustion conjointe du liant et du porogène et conduisant à la fissuration. Ce procédé nécessite cependant de rallonger sensiblement la durée du cycle de déliantage et réduit par conséquent la productivité du procédé dans sa globalité. Par ailleurs ce processus s'avère difficilement maîtrisable pour des produits ayant des combinaisons variées de liants temporaires ou associant en outre d'autres agents organiques, tels que par exemple des plastifiants, des agents mouillants ou des lubrifiants.

La présente invention a d'abord pour objet de proposer une solution alternative, permettant d'éviter les problèmes liés à l'apparition de fortes contraintes thermiques lors de l'étape de déliantage et au final de défauts sur le filtre.

Dans une forme très générale, l'invention se rapporte à un procédé facilité d'obtention d'une structure en nid d'abeille de porosité adaptée à une utilisation comme filtre, notamment des suies issues d'un moteur diesel. Selon le procédé, on utilise comme agent porogène des particules inorganiques poreuses à base de silice.

L'utilisation des particules creuses inorganiques est par exemple décrite dans la demande de brevet JP 2001-206785 afin d'obtenir des filtres en carbure de silicium de forte porosité et présentant une bonne résistance mécanique. Les porogènes utilisés sont à base d'alumine et de silice. Le procédé décrit diffère du présent procédé par la taille des grains de carbure de silicium employés, la température de cuisson utilisée ainsi que la composition chimique des particules creuses. Ces billes, du type E-Sphères ou Microcells, contiennent en effet une très forte proportion d'alumine. En outre, le procédé doit être mis en oeuvre avec une taille de grains de SiC maximale de 3 µm. Une taille supérieure de grains ne permet pas selon les auteurs d'obtenir un frittage et une résistance mécanique suffisante du filtre.

Plus précisément, la présente invention se rapporte à un procédé de fabrication d'une structure poreuse en carbure de silicium du type en nid d'abeilles, ledit procédé étant caractérisé en ce qu'il comprend les étapes suivantes :
a) formation en présence d'eau d'une pâte à partir d'un mélange de grains de carbure de silicium SiC dont le diamètre médian d₅₀ est compris entre 5 µm et 300 µm, de préférence entre 10 µm et 150 µm, d'un liant organique et d'un agent porogène inorganique sous forme de particules à base de silice, dont la teneur pondérale en alumine est inférieure à 15%, la porosité globale desdites particules étant supérieure à 70%,
b) mise en forme, de préférence par extrusion, d'un monolithe plastique brut en forme de nid d'abeille,
c) séchage du monolithe,
d) cuisson du monolithe jusqu'à une température supérieure à 2100°C.

Au sens de la présente description, le diamètre médian d₅₀ désigne ici le diamètre des particules au dessus duquel se trouve 50% en masse de la population de grains.

Selon un mode avantageux de l'invention, au moins 10% massique desdits grains de SiC présentent un diamètre supérieur à 5 µm, le diamètre médian d₅₀ de cette fraction granulométrique étant compris entre 5 µm et 300 µm, de préférence entre 10 et 150 µm.

Par exemple, un mélange selon l'invention peut être obtenu à partir d'au moins deux fractions de grains, une fraction de grains présentant une taille comprise entre 0,1 et 10 µm, de préférence entre 0,1 et 5 µm et une fraction de grains présentant une taille comprise entre 5 µm et 300 µm, de préférence entre 10 et 150 µm.

Par particule à base de silice, il est entendu au sens de la présente description que la silice représente au moins 50%, de préférence au moins 60% et de manière très préférée au moins 65% de la masse totale des oxydes constituant la particule.

Avantageusement, les particules sont des billes pleines ou creuses sensiblement sphériques et de diamètre moyen compris entre 5 et 100 µm, de préférence compris entre 10 et 30 µm.

Par exemple, lorsque les billes sont creuses, l'épaisseur de la paroi est inférieure à 30% du diamètre moyen des particules, de préférence inférieur à 10% dudit diamètre, voire inférieure à 5%.

Sans sortir du cadre de l'invention, les particules à base de silice peuvent comprendre de l'alumine Al₂O₃ dans une teneur pondérale inférieure à 10%, ou même inférieure à 5%, voire inférieure à 1%. De manière très préférée, l'alumine est présente selon l'invention uniquement sous forme d'impuretés inévitables.

Par exemple, les particules à base de silice comprennent les éléments suivants, en pourcentage pondéral :
SiO₂ : de 50 à 99% et de préférence supérieur à 65%,
Na₂O : de 0 à 20% et de préférence de 1 à 15%,
CaO : de 0 à 15 % et de préférence de 1 à 10%,
B₂O₃ : de 0 à 20% et de préférence de 1 à 6,5%,
P₂O₅ : de 0 à 5% et de préférence de 0,5 à 1,5%,
le reste étant constitué par des impuretés inévitables.

L'étape de cuisson peut être mise en oeuvre sous air jusqu'à une température comprise entre 300 et 750°C, puis sous une atmosphère non oxydante, de préférence neutre, jusqu'à une température comprise entre 2100 et 2450°C. La vitesse de chauffe lors de l'étape de cuisson sous air est par exemple comprise selon le présent procédé entre 5 et 200°C/h, de préférence entre 10 et 150°C par heure, avantageusement sans palier intermédiaire.

La quantité massique des particules de porogène, rapportée à une base 100 en poids de SiC, est le plus souvent comprise entre 1 et 30, de préférence entre 1 et 17.

L'invention se rapporte également à une structure poreuse en carbure de silicium du type en nid d'abeilles susceptible d'être obtenue selon le procédé précédemment décrit.

En particulier, la structure poreuse obtenue selon le présent procédé peut être utilisée comme support catalytique dans une ligne d'échappement d'un moteur diesel ou essence ou comme filtre à particules dans une ligne d'échappement d'un moteur diesel.

L'invention sera mieux comprise à la lecture des exemples qui suivent, donnés à titre illustratifs et ne limitant l'invention sous aucun des aspects décrits. Dans ces exemples, tous les pourcentages sont donnés en poids.

### Exemples :

On a utilisé dans les exemples deux fractions de grains de carbure de silicium. Une première fraction présente un diamètre médian d₅₀ compris entre 5 µm et 50 µm et au moins 10% en masse des grains composant cette fraction présentent un diamètre supérieur à 5 µm. La deuxième fraction présente un diamètre médian des grains inférieur à 5 µm. Les deux fractions sont mélangées dans un rapport massique égal à 1 avec un liant temporaire du type méthylcellulose et un agent porogène. Le tableau 1 indique les proportions massiques respectives en ces différents constituants dans le mélange, rapportées à une référence 100 en poids de SiC.

Le porogène est soit un porogène organique de polyéthylène représentatif de l'art antérieur (exemples 1, 3 et 5), soit un porogène inorganique selon l'invention (exemples 2, 4 et 6). Le porogène à base de silice utilisé est commercialisé par la société Potters sous la référence Sphericel 110P8 ©, se présente sous la forme de billes creuses de diamètre moyen d'environ 10 µm et comprenant 70% poids de SiO₂, 13% poids de Na₂O, 7% poids de CaO et 5% poids de B₂O₃. L'épaisseur de la paroi des billes creuses est comprise entre 1 et 5% du diamètre moyen des particules.

Pour être directement comparables, les essais ont été réalisés à volume de porogène constant entre respectivement les exemples 1 et 2, 3 et 4 ou 5 et 6. La différence de densité des porogènes organique et inorganique utilisés explique que les apports massiques de porogènes dans respectivement les mélanges 1 et 2, 3 et 4 ou 5 et 6 soient légèrement différents.

**Tableau 1**

| Exemple n° | 1 | 2 | 3 | 4 | 5 | 6 |
|---|---|---|---|---|---|---|
| Mélange granulaire de SiC (>98% poids) | 100 | 100 | 100 | 100 | 100 | 100 |
| Porogène organique (polyéthylène) (diamètre 20-100 µm) | +3 | | +7,5 | | +12 | |
| Porogène inorganique (Sphericel 110P8) | | +3,5 | | +8,5 | | +14 |
| Ratio massique SiC /porogène | 33,3 | 28,6 | 13,3 | 11,8 | 8,3 | 7,1 |
| Liant temporaire : methylcellulose | +8 | +8 | +8 | +8 | +8 | +8 |
| Eau | +20 | +20 | +20 | +20 | +20 | +20 |

Les mélanges sont malaxés pendant 10 minutes en présence d'eau dans un malaxeur jusqu'à l'obtention d'une pâte homogène. La pâte est étirée pendant 30 minutes afin de rendre la pâte plastique et permettre la désaération du mélange.

Des monolithes en nid d'abeille sont ensuite extrudés avec une pression de l'ordre de 60 kg/cm². L'épaisseur des parois interne de la structure extrudée est d'environ 0,3 mm.

Les monolithes sont ensuite coupés à une longueur de 6'' (1 pouce = 2,54 cm), puis séchés par micro-onde jusqu'à atteindre une humidité résiduelle inférieure à 1% poids en eau.

Les structures sont ensuite soumises à une première étape de déliantage sous air permettant principalement l'élimination du liant, jusqu'à une température maximale de 750°C et à une vitesse de chauffe de 30°C/h, sans palier intermédiaire. Cette première étape de chauffe est immédiatement suivie d'une cuisson sous argon jusqu'à une température d'au moins 2100°C mais inférieure à 2450°C.

Les monolithes sont ensuite cuits à cette température pendant 2 heures, puis lentement refroidis jusqu'à l'ambiante.

Les analyses ATD/DSC à une vitesse de rampe de 5°C/minute avec un équipement Netszch® sur des échantillons des exemples 1, 3 et 5 présentent un phénomène exothermique très prononcé à environ 210°C et vers 300°C. Les analyses ATD/DSC des échantillons correspondant aux exemples 2, 4 et 6 ne montrent pas de pics exothermiques lors du déliantage sous air jusqu'à 750°C.

Selon des techniques bien connues, la porosité et le diamètre médian de pores ont été mesurés par porométrie au mercure Hg. Le module de rupture a été mesuré sur barrettes extrudées de dimensions 6×8×60 mm en flexion 3 points selon la norme ISOS014.

Les structures finalement obtenues ont été analysées et inspectées visuellement pour détecter la présence de défauts externes ou internes telles que par exemple des fissures.

Les résultats des tests sont reportés dans le tableau 2.

**Tableau 2**

| Exemple n° | 1 | 2 | 3 | 4 | 5 | 6 |
|---|---|---|---|---|---|---|
| Température maxi de cuisson des monolithes (°C) | 2100 | 2100 | 2100 | 2100 | 2100 | 2100 |
| % porosité (Hg) | 44 | 45 | 48 | 48 | 52 | 52 |
| Diamètre médian des pores (µm) | 13 | 15 | 15 | 18 | 19 | 21 |
| Module de rupture MOR (MPa) | 37 | 38 | 27 | 29 | 18 | 22 |
| Présence de défauts (fissures internes) | Oui | Non | Oui | Non | Oui | Non |

Toutes les structures préparées dans les conditions de l'art antérieur (exemples 1, 3 et 5) présentent des fissures alors que toutes les structures obtenues selon l'invention ne présentent pas de défaut, bien que préparées dans les mêmes conditions. De plus, à porosité et diamètre de pores sensiblement équivalents, on peut noter une résistance mécanique légèrement améliorée du filtre obtenu avec le porogène inorganique selon l'invention.

Dans la description et les exemples qui précèdent, pour des raisons de simplicité, on a décrit l'invention en relation avec les filtres à particules éventuellement catalysés permettant l'élimination des suies voire de polluants gazeux présents dans les gaz d'échappement en sortie d'une ligne d'échappement d'un moteur diesel. La présente invention est applicable cependant également à des supports catalytiques permettant l'élimination des polluants gazeux en sortie des moteurs essence voire diesel. Dans ce type de structure, les canaux du nid d'abeille ne sont obstrués à l'une ou l'autre de leur extrémité.

## Revendications

1. Procédé de fabrication d'une structure poreuse en carbure de silicium du type en nid d'abeilles, ledit procédé étant **caractérisé en ce qu'**il comprend les étapes suivantes :
a) formation en présence d'eau d'une pâte à partir d'un mélange de grains de carbure de silicium dont le diamètre d₅₀ est compris entre 5 µm et 300 µm, de préférence entre 10 et 150 µm, d'un liant organique et d'un agent porogène inorganique, sous forme de particules à base de silice dont la teneur pondérale en alumine est inférieure à 15%, la porosité globale desdites particules étant supérieure à 70%,
b) mise en forme, de préférence par extrusion, d'un monolithe plastique brut en forme de nid d'abeille,
c) séchage dudit monolithe,
d) cuisson du monolithe jusqu'à une température supérieure à 2100°C.

2. Procédé selon la revendication 1, dans lequel au moins 10% massique desdits grains de SiC présentent un diamètre supérieur à 5 µm, le diamètre médian d₅₀ de cette fraction granulométrique étant compris entre 5µm et 300 µm.

3. Procédé selon la revendication 1 ou 2, dans lequel le mélange est obtenu à partir d'au moins deux fractions de grains dont :
- une fraction de grains dont le diamètre médian est compris entre 0,1 et 10 µm, de préférence entre 0,1 et 5 µm et
- une fraction de grains dont le diamètre médian est compris entre 5 µm et 300 µm, de préférence entre 10 et 150 µm.

4. Procédé selon l'une des revendications précédentes, dans lequel les particules sont des billes pleines ou creuses sensiblement sphériques et de diamètre moyen compris entre 5 et 100 µm, de préférence compris entre 10 et 30 µm.

5. Procédé selon la revendication 4 dans lequel les billes sont creuses, l'épaisseur de la paroi étant inférieure à 30% du diamètre moyen des particules, de préférence inférieur à 10% dudit diamètre, voire inférieure à 5%.

6. Procédé selon l'une des revendications précédentes, dans lequel les particules à base de silice comprennent une teneur pondérale en alumine dans les particules à base de silice inférieure à 10%, de préférence inférieure à 5% et de manière très préférée dans lequel l'alumine est présente uniquement sous forme d'impuretés inévitables.

7. Procédé selon l'une des revendications précédentes, dans lequel les particules à base de silice comprennent les éléments suivants, en pourcentage pondéral :
SiO₂ : de 50 à 99% et de préférence supérieur à 65%,
Na₂O : de 0 à 20% et de préférence de 1 à 15%,
CaO : de 0 à 15 % et de préférence de 1 à 10%,
B₂O₃ : de 0 à 20% et de préférence de 1 à 6,5%,
P₂O₅ : de 0 à 5% et de préférence de 0,5 à 1,5%,
le reste étant constitué par des impuretés inévitables.

8. Procédé selon l'une des revendications précédentes, dans lequel l'étape de cuisson est mise en oeuvre sous air jusqu'à une température comprise entre 300 et 750°C, puis sous une atmosphère non oxydante, de préférence neutre, jusqu'à une température comprise entre 2100 et 2450°C.

9. Procédé selon la revendication 8, dans lequel la vitesse de chauffe lors de l'étape de cuisson sous air est comprise entre 5 et 200°C/h, de préférence entre 10 et 150°C par heure, sans palier intermédiaire.

10. Procédé selon l'une des revendications précédentes, dans lequel la quantité massique de particules de porogènes, rapportée à une base 100 en poids de SiC, est comprise entre 1 et 30, de préférence entre 1 et 17.

11. Structure poreuse en carbure de silicium du type en nid d'abeilles susceptible d'être obtenu selon l'une des revendications précédentes.

12. Utilisation d'une structure obtenue selon l'une des revendications 1 à 10 comme support catalytique dans une ligne d'échappement d'un moteur diesel ou essence ou comme filtre à particules dans une ligne d'échappement d'un moteur diesel.

## Claims

1. A process for manufacturing a porous silicon carbide structure of the honeycomb type, said process being **characterized in that** it comprises the following steps:
a) forming, in the presence of water, of a paste from a mixture of silicon carbide grains, the diameter d₅₀ of which is between 5 µm and 300 µm, preferably between 10 and 150 µm, of an organic binder and of an inorganic pore former, in the form of particles based on silica, the alumina weight content of which is less than 15%, the overall porosity of said particles being greater than 70%;
b) forming, preferably by extrusion, of a honeycomb-shaped green plastic monolith;
c) drying of said monolith; and
d) firing of the monolith at a temperature greater than 2100°C.

2. The process as claimed in claim 1, in which at least 10% by weight of said SiC grains have a diameter greater than 5 µm, the median diameter d₅₀ of this particle size fraction being between 5 µm and 300 µm.

3. The process as claimed in claim 1 or 2, in which the mixture is obtained from at least two grain fractions, including:
- a grain fraction in which the median diameter of the grains is between 0.1 and 10 µm, preferably between 0.1 and 5 µm; and
- a grain fraction in which the median diameter of the grains is between 5 µm and 300 µm, preferably between 10 and 150 µm.

4. The process as claimed in one of the preceding claims, in which said particles are approximately spherical hollow or solid balls having a mean diameter between 5 and 100 µm, preferably between 10 and 30 µm.

5. The process as claimed in claim 4, in which the balls are hollow, the thickness of the wall being less than 30% of the mean diameter of the particles, preferably less than 10% of said diameter or even less than 5%.

6. The process as claimed in one of the preceding claims, in which the silica-based particles have an alumina weight content in the silica-based particles of less than 10%, preferably less than 5% and very preferably in which the alumina is present only in the form of unavoidable impurities.

7. The process as claimed in one of the preceding claims, in which the silica-based particles comprise the following elements, in percentages by weight:
SiO₂:from 50 to 99% and preferably greater than 65%;
Na₂O:from 0 to 20% and preferably from 1 to 15%;
CaO:from 0 to 15% and preferably from 1 to 10%;
B₂O₃:from 0 to 20% and preferably from 1 to 6.5%;
P₂O₅:from 0 to 5% and preferably from 0.5 to 1.5%, the balance consisting of unavoidable impurities.

8. The process as claimed in one of the preceding claims, in which the firing step is carried out in air at a temperature between 300 and 750°C, then in a nonoxidizing, preferably inert, atmosphere at a temperature between 2100 and 2450°C.

9. The process as claimed in claim 8, in which the heating rate during the firing step in air is between 5 and 200°C/h, preferably between 10 and 150°C per hour, with no intermediate temperature hold.

10. The process as claimed in one of the preceding claims, in which the amount of pore-forming particles by weight, relative to a base 100 by weight of SiC, is between 1 and 30, preferably between 1 and 17.

11. A porous silicon carbide structure of the honeycomb type that can be obtained by a process as claimed in one of the preceding claims.

12. The use of a structure obtained by the process as claimed in one of claims 1 to 10 as catalytic support in an exhaust line of a diesel or petrol engine or as particulate filter in an exhaust line of a diesel engine.

## Patentansprüche

1. Verfahren zur Herstellung einer wabenförmigen porösen Struktur aus Siliciumcarbid, **dadurch gekennzeichnet, dass** es die Stufen:
a) Bilden einer Masse aus einem Gemisch aus Siliciumcarbidkörnern, deren Durchmesser d₅₀ 5 bis 300 µm und vorzugsweise zwischen 10 und 150 µm beträgt, einem organischen Bindemittel und einem porenbildenden anorganischen Mittel in Form von Teilchen auf der Basis von Siliciumdioxid, dessen Gewichtsgehalt an Aluminiumoxid weniger als 15 % beträgt, in Gegenwart von Wasser, wobei die Gesamtporosität dieser Teilchen mehr als 70 % beträgt,
b) Formen eines wabenförmigen, plastischen Rohmonolithen, vorzugsweise durch Extrudieren,
c) Trocknen dieses Monolithen und
d) Brennen des Monolithen bis auf eine Temperatur von mehr als 2100 °C
umfasst.

2. Verfahren nach Anspruch 1, in welchem mindestens 10 Masse-% der SiC-Körnchen einen Durchmesser von größer als 5 µm besitzen, wobei der mittlere Durchmesser d₅₀ dieser Korngrößenfraktion 5 bis 300 µm beträgt.

3. Verfahren nach Anspruch 1 oder 2, in welchem das Gemisch aus mindestens zwei Kornfraktionen erhalten wird, davon aus:
- einer Fraktion aus Körnern, deren mittlerer Durchmesser 0,1 bis 10 µm und vorzugsweise zwischen 0,1 und 5 µm beträgt, und
- einer Fraktion aus Körnern, deren mittlerer Durchmesser 5 bis 300 µm und vorzugsweise zwischen 10 und 150 µm beträgt.

4. Verfahren nach einem der vorhergehenden Ansprüche, in welchem die Teilchen im Wesentlichen runde volle oder hohle Kugeln mit einem mittleren Durchmesser von 5 bis 100 µm und vorzugsweise 10 bis 30 µm sind.

5. Verfahren nach Anspruch 4, in welchem die Kugeln hohl sind und die Wanddicke weniger als 30 % des mittleren Durchmessers der Teilchen, vorzugsweise weniger als 10 %, und sogar weniger als 5 % dieses Durchmessers beträgt.

6. Verfahren nach einem der vorhergehenden Ansprüche, in welchem die Teilchen auf der Basis von Siliciumdioxid einen Gewichtsgehalt an Aluminiumoxid in den Teilchen auf der Basis von Siliciumdioxid von weniger als 10 % und vorzugsweise weniger als 5 % umfassen, und besonders bevorzugt, in welchem das Aluminiumoxid ausschließlich in Form unvermeidlicher Verunreinigungen vorliegt.

7. Verfahren nach einem der vorhergehenden Ansprüche, in welchem die Teilchen auf der Basis von Siliciumdioxid folgende Bestandteile in Gewichtsprozent umfassen:
SiO₂: 50 bis 99 % und vorzugsweise mehr als 65 %,
Na₂O: 0 bis 20 % und vorzugsweise 1 bis 15 %,
CaO: 0 bis 15 % und vorzugsweise 1 bis 10 %,
B₂O₃: 0 bis 20 % und vorzugsweise 1 bis 6,5 %,
P₂O₅: 0 bis 5% und vorzugsweise 0,5 bis 1,5 %,
wobei der Rest aus unvermeidlichen Verunreinigungen besteht.

8. Verfahren nach einem der vorhergehenden Ansprüche, in welchem die Brennstufe unter Luft bis zu einer Temperatur von 300 bis 750 °C und anschließend unter einer vorzugsweise neutralen nichtoxidierenden Atmosphäre bis zu einer Temperatur von 2100 bis 2450 °C durchgeführt wird.

9. Verfahren nach Anspruch 8, in welchem die Erwärmungsgeschwindigkeit während der Brennstufe unter Luft 5 bis 200 °C/h und vorzugsweise zwischen 10 und 150 °C pro Stunde ohne Zwischenhalt beträgt.

10. Verfahren nach einem der vorhergehenden Ansprüche, in welchem der Massenanteil der porenbildenden Teilchen, bezogen auf eine Basis von 100 SiC-Gewicht, 1 bis 30 und vorzugsweise zwischen 1 und 17 beträgt.

11. Wabenförmige poröse Siliciumcarbidstruktur, die nach einem der vorhergehenden Ansprüche hergestellt werden kann.

12. Verwendung einer Struktur, die nach einem der Ansprüche 1 bis 10 erhalten worden ist, als katalytischer Träger in der Abgasanlage eines Diesel- bzw. Benzinmotors oder als Partikelfilter in der Abgasanlage eines Dieselmotors.
